# EUROPEAN PATENT APPLICATION

(11) **EP 1 923 612 A2**
(43) Date of publication of application: **21.05.2008**
(21) Application number: 08151265.9
(22) Date of filing: 09.02.2005
(51) Int. Cl.: F16K 11/22, F24H 9/12

(54) **Stop cock**

(30) Priority: 13.02.2004 NO 20040650
(62) Divisional of application: 05710942.3
(71) Applicant: Frølich Braathen, Thor, 3359 Eggedal (NO)
(72) Inventor: Frølich Braathen, Thor, 3359 Eggedal (NO)
(74) Representative: Agvald-Glas, Kerstin Gunilla

(57) **Abstract**

A stopcock (2; 2') for a water heater, which stopcock comprises an end plug (12; 12') with an opening through which there extends a spindle (11; 11') in threaded engagement with the opening. A conical surface (14; 14') of the spindle (11; 11') is in sealing abutment with a correspondingly shaped seat in the end plug (12; 12') when the stopcock (2; 2') is in an open position.

## Description

The present invention relates to a stopcock for a water heater.

Combination valves in which there is a mixing of cold water into the hot water from the water heater to avoid scalding are already known. However, these combination valves have a number of drawbacks such as inadequate leakproofing and inadequate inspection possibilities for detecting leakage points in the valves, and that the associated piping must be dismantled for replacement of the combination valve's check valve with suitable parts. Additional drawbacks include problems of furring in the valves and variable hot water draw-off temperature when cold water is drawn at the same time.

The combination valve as disclosed herein seeks to solve the aforementioned problems associated with the prior art, and to provide a solution having a minimum number of parts and a simple structure, which permits rational production at reduced productions costs.

A first aspect relates to a combination valve for a water heater, comprising an inlet for cold water, an outlet for cold water to the water heater, an inlet for hot water from the water heater, and an outlet for hot water from the combination valve. The valve further comprises a check valve having a check valve piston and a mixing valve equipped with a temperature sensor that expands in its longitudinal direction with increased water temperature. The temperature sensor has a head at one end and an end journal at its opposite, other end. The combination valve is characterised in that a seat/shaft element includes a first fixed seat for the end journal of the temperature sensor and a second seat from which the temperature sensor head is lifted when the hot water through the inlet from the water heater is at a cut-in temperature or higher. A part of the temperature sensor extends through an opening in the seat/shaft element around which opening the seat is provided, and which seat/shaft element further comprises a shaft for sliding movement of the check valve's check valve piston. The opening and a plurality of openings in proximity to the shaft provide fluid communication between the check valve and the mixing valve when the head of the temperature sensor is lifted from the seat, so that cold water is mixed with the hot water from the inlet.

Another aspect relates to an annular gasket for a check valve intended for a water heater, which check valve includes a valve piston for sealing against a flat seat. The gasket is characterised in that an annular portion of the gasket comprising a surface for sealing against the seat is essentially in the form of a semi O-ring gasket.

The present invention relates to a stopcock for a water heater, which stopcock comprises an end plug with an opening through which there extends a spindle in threaded engagement with the opening. The stopcock is characterised in that a conical surface of the spindle is in sealing abutment with a correspondingly shaped seat in the end plug when the stopcock is in an open position.

A final aspect relates to a plug for a valve intended for a water heater. The end plug is made having threads for threaded engagement with corresponding threads in the valve body, and is characterised in that a round surface of the plug is in sealing abutment with a conical seat in the valve body when the plug is fully screwed into the body.

In what follows the invention will be described in more detail with reference to the attached drawings, wherein:
Figure 1 is a perspective view of a first embodiment of the combination valve;
Figure 2 is a sectional view of the combination valve in Fig. 1:
Figure 3 is a perspective sectional view of the combination valve in Fig. 1;
Figure 4 is a perspective view of a second embodiment of the combination valve;
Figure 5 is a sectional view of the combination valve in Fig. 3, but without an overflow valve;
Figure 6 is a perspective sectional view of the combination valve in Fig. 3, but without an overflow valve; and
Figures 7a and 7b are two perspective views of a seat/shaft element that is a component of the combination valve in Figs. 1-6.

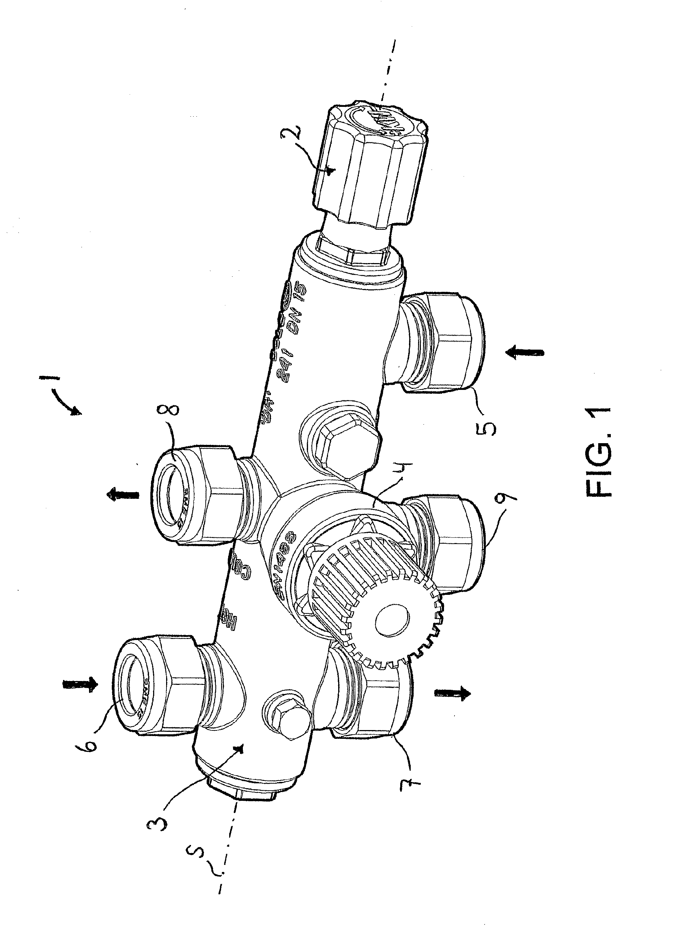

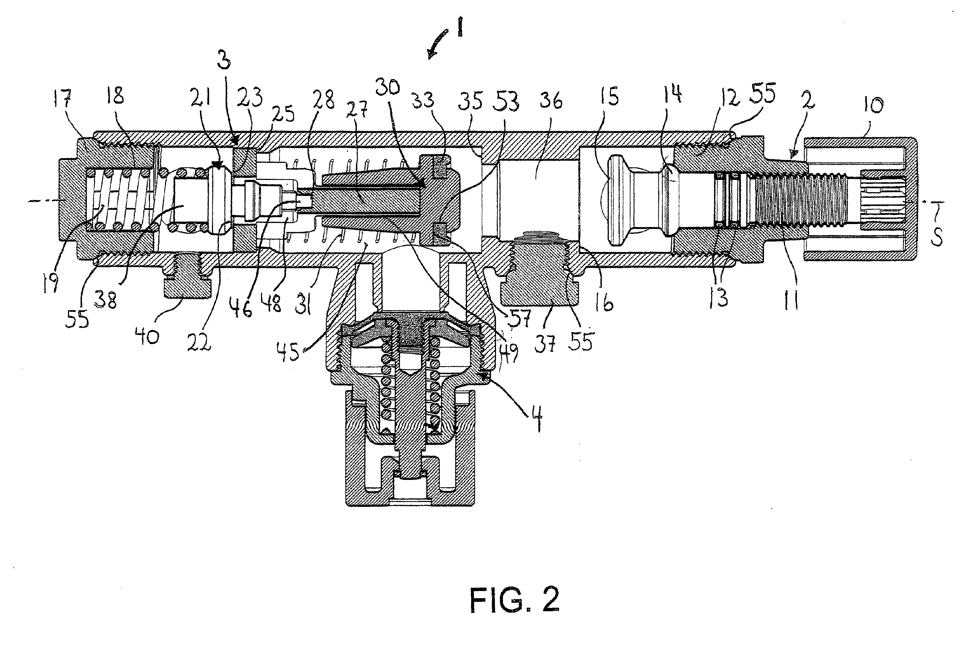

With reference to Figures 1-3, there is shown a first embodiment of a combination valve or fitting 1, having a substantially tubular body, preferably of brass, along a centre axis S. At a first end of the combination valve 1 a stopcock 2 is provided, and arranged at the opposite, second end along the centre axis S of the combination valve 1 is a combined check and mixing valve 3. About halfway between the stopcock 2 and the check and mixing valve 3 along the centre axis S, and at right angles thereto, is arranged an overflow or relief valve 4 with an overflow 9, which overflow or relief valve 4 is known *per se*. The detailed structure and function of the last-mentioned will therefore only be described insofar as it is of consequence for the invention.

At the first end, by the stopcock 2, there is arranged an inlet 5 for cold water. At the second end, by the combined check and mixing valve 3, there is arranged an inlet 6 for hot water from a non-illustrated water heater and an outlet 7 for hot water adjusted to the right temperature by the mixing in of cold water. At the inlet to the relief valve 4 there is arranged an outlet 8 for cold water to the water heater. For an easier understanding of the invention, Figure 1 also shows the flow direction of the water by means of arrows.

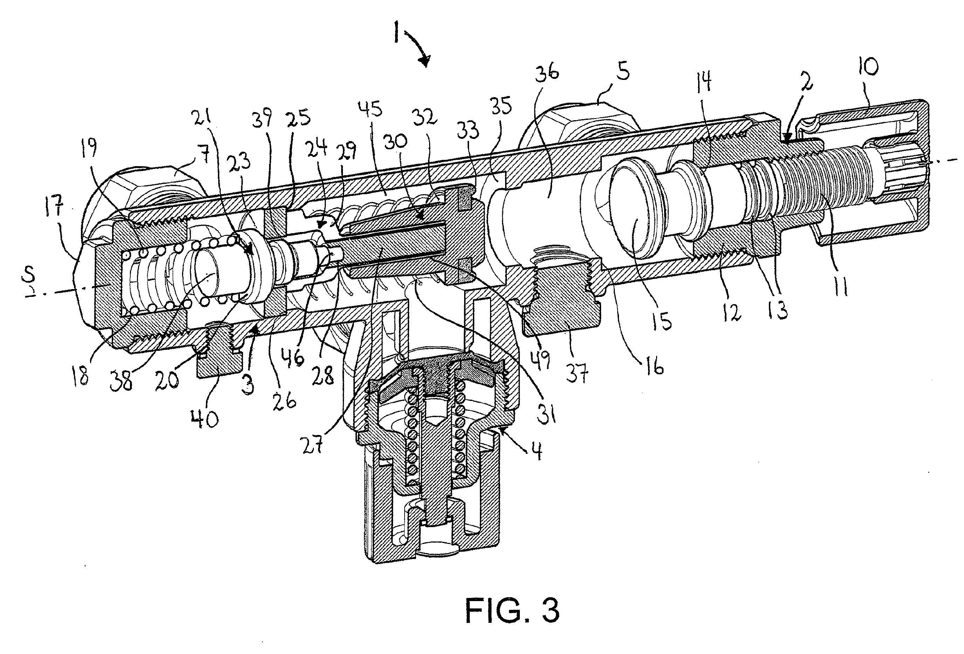

Referring in particular to Figure 3, the stopcock 2 comprises a stop wheel 10 secured to a spindle 11. The spindle 11 has external threads, and is passed through a centric and internally threaded opening in an end plug 12. Two O-rings 13, lubricated with silicone grease, seal between the end plug 12 and the spindle 11. The end plug 12 is further made having external threads in threaded engagement with internal threads formed on a tubular outer part of the combination valve 1 body. When the stopcock 2 is in an open position, as shown in the figures, a conical surface 14 of the spindle 11 rests in a correspondingly shaped seat in the end plug 12, which provides further sealing against leakage when the stopcock 2 is in an open position. The spindle 11 is further provided with an outer piston 15 which, when the stopcock 2 is moved into a closed position by turning the stop wheel 10, rests sealingly against a seat 16 with a centric opening and formed peripherally in the body. The piston 15 is advantageously formed as an integral part of the spindle 11, and the whole spindle 11 and the end plug 12 are preferably made of plastic. By using plastic furring problems are avoided, and at the same time the seal between the conical surface 14 and the seat in the end plug 12 is enhanced because of the inherent "failure" of plastic.

At the second, opposite end of the combination valve 1, the combined check and mixing valve 3 is made having an externally threaded end plug 17 in threaded engagement with internal threads formed on a tubular opposite outer part of the combination valve 1 body. A centric bore 18 in the end plug 17 serves as a first seat for a coil spring 19, whilst a first flange surface 20 of a temperature sensor 21 serves as a second seat for the coil spring 19. An opposite, second flange surface 22 of the temperature sensor 21 is in abutment with a peripherally formed end surface 23 of a seat/shaft element 24. An opposite, second peripherally formed surface 25 of the seat/shaft element 24 rests against a peripherally formed seat 26 located in the body and having a centric opening 39 through which a part of the temperature sensor 21 extends. The seat/shaft element 24 is further made having a plurality of spaced supporting ribs 29 which together hold a centrically arranged shaft 27, so that between the supporting ribs 29 there are openings 48 for water flow. A calibration hole 28 is centrically arranged in the transition between the supporting ribs 29 and the shaft 27, which calibration hole 28 serves as a second seat for the temperature sensor 21, and where the cut-in temperature for the mixing of cold water into the hot water from the water heater is determined by the depth of the calibration hole 28, as will be described in more detail below.

A check valve piston 30 is slidably secured to the shaft 27, the valve piston 30 being provided with a centric blind hole 49 which receives the shaft 27. Arranged on the outside of the check valve piston 30, essentially parallel to the longitudinal axis S, is a coil spring 31, which at one end thereof bears against a seat 50 adjacent to the supporting ribs 29, and at the other end thereof bears against a peripheral flange surface 32 of the check valve 30. An opposite peripheral surface 33 of the check valve piston 30 constitutes a sealing surface which the coil spring 31, under given operating conditions, biases into sealing abutment with a peripherally arranged seat 35 in the essentially tubular body of the combination valve 1, as will be explained in more detail below.

The seat 35 and the seat 16 define between them a flow passage 36, and an inspection plug 37 in threaded cooperation with an opening into the flow passage 36 is provided through the combination valve 1 body. Removal of the inspection plug thus allows inspection of the seal between the check valve piston 30 and its seat 35, and the seal between the stopcock 2 piston 15 and seat 16, as will be explained in more detail below.

During normal operation, with the stopcock 2 in an open position, the function of the combination valve 1 is as follows: Cold water from the water mains is in fluid communication with the interior of the combination valve 1 through the inlet 5, and the water pressure in the flow passage 36 is the same as in the water mains. The coil spring 31 of the check valve has such spring stiffness that the check valve piston 30 seals against the seat 35, apart from when hot water is drawn off via the outlet 7 so that the pressure on an inner side 45 of the check valve piston 30 drops. This prevents water from the water heater from flowing into the flow passage 36 and being mixed with water from the mains.

When hot water is drawn off via the outlet 7 and the check valve is thus open, the water heater will be refilled with water through the outlet 8. The temperature sensor 21 is so provided that it expands in its longitudinal direction, essentially parallel to the longitudinal direction S, as a function of the temperature to which the head 38 of the temperature sensor is subjected. More specifically, the head 38 of the temperature sensor is filled with a wax which expands under conditions of rising temperature, and presses the end journal 46 of the temperature sensor 21 out. When the cut-in temperature is reached, the flange surface 22 of the temperature sensor 21 will be lifted from abutment with the peripherally formed end surface 23 of the seat/shaft element 24, and the cut-in temperature will increase with the depth of the calibration hole 28, the bottom of the calibration hole 28 constituting a fixed seat for the temperature sensor 21. The coil spring 19 acts on the temperature sensor 21 in a direction opposite to the expansion direction, and has a spring stiffness that contracts the temperature sensor so that the flange surface 22 of the temperature sensor 21 is brought into sealing abutment with the end surface 23 of the seat/shaft element 24 when the temperature of the water from the inlet 6 falls below the cut-in or calibration temperature again. The centric bore 18 which serves as a seat for the coil spring 19 is also carefully bored so that the coil spring 19 is supported along a part of its length and that the flange surface 22 is thus brought into true abutment with the end surface 23 of the seat/shaft element 24. The combination valve 1 will thus have a factory-set fixed, precalibrated temperature setting which cannot be changed by the user.

If the water from the water heater through the inlet 6 has a temperature that is higher than the calibration temperature (the desired temperature of the water from the combination valve 1 outlet 7), the head 38 of the temperature sensor 21 will be lifted from its abutment with the end surface 23 so that cold water flows through the openings between the supporting ribs 29 of the seat/shaft element 24, though the opening 39 through which a part of the temperature sensor 21 extends in order ultimately to be mixed with the water from the water heater so that the water from the outlet 7 maintains the calibration temperature.

However, if the water from the water heater has a temperature equal to or less than the calibration temperature, the opening 39 will be kept closed by the temperature sensor 21 head 38. The opening 39 will thus constitute the partition between the hot water zone and the cold water zone of the combination valve 1, respectively to the left and to the right in the figures.

Should the temperature sensor 21 be damaged so that the spring 19 does not manage to press the temperature sensor head 38 into abutment with the end surface 23 when the calibration temperature is not reached, the centric opening 39, through which a part of the temperature sensor 21 extends, is advantageously such that the temperature of the water from the outlet 7 does not fall below a predetermined value, for example, 50°C, when the water heater is at normal temperature. Thus, the danger of scalding from the drawn water is avoided even if the temperature sensor 21 is defective, and at the same time the temperature in the water heater is high enough to kill bacteria (above about 70°C).

In the hot water zone of the combination valve 1, and through the threaded opening in its body, there is provided a correspondingly threaded breather plug 40 for use when emptying the water heater of water. Emptying is carried out by first closing the stopcock 2 and then removing breather plug 40, whereupon the pressure in the water heater is adjusted to counteract vacuum. Upon subsequent unscrewing of the relief valve 4 handwheel, water from the water heater will be emptied through the overflow 9.

Furthermore, servicing of the check and mixing valve 3 can be carried out simply by dismantling the combination valve 1, i.e., without dismantling the associated piping. This is done by first closing the stopcock 2 and then unscrewing the end plug 17. Subsequently, all the parts of the check and mixing valve 3 can be removed from the body of the combination valve 1 through the opening for the end plug 17.

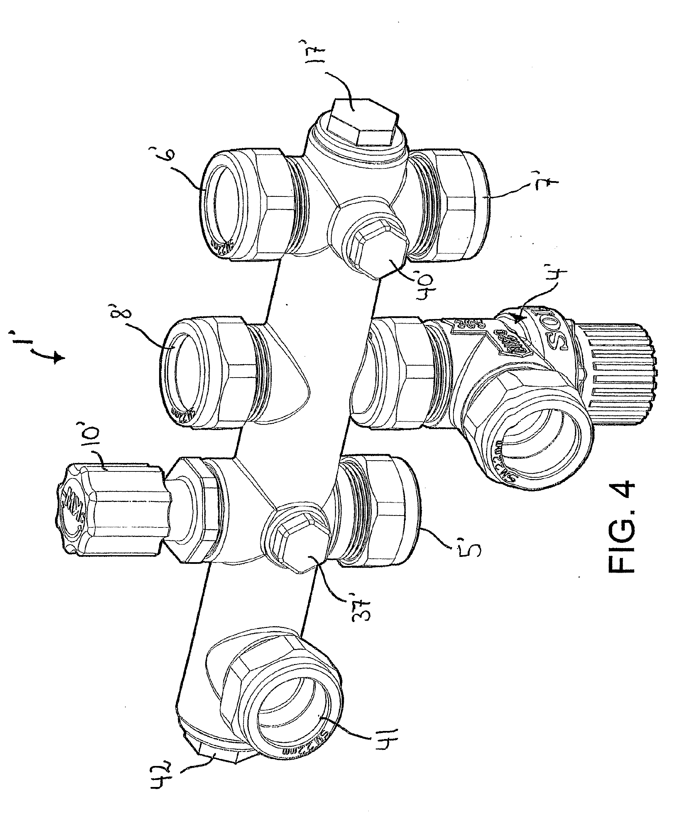

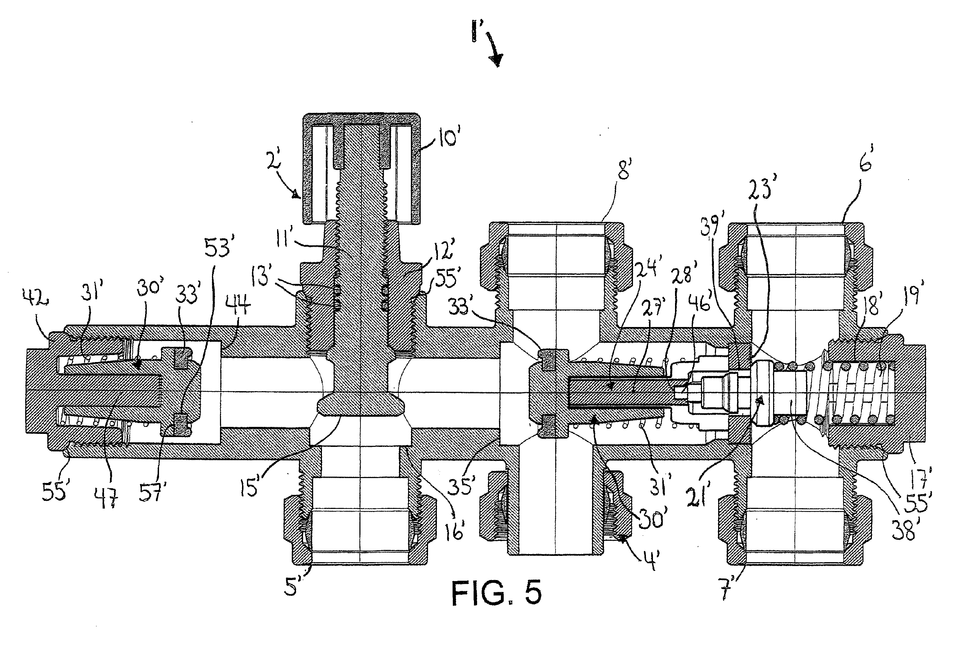

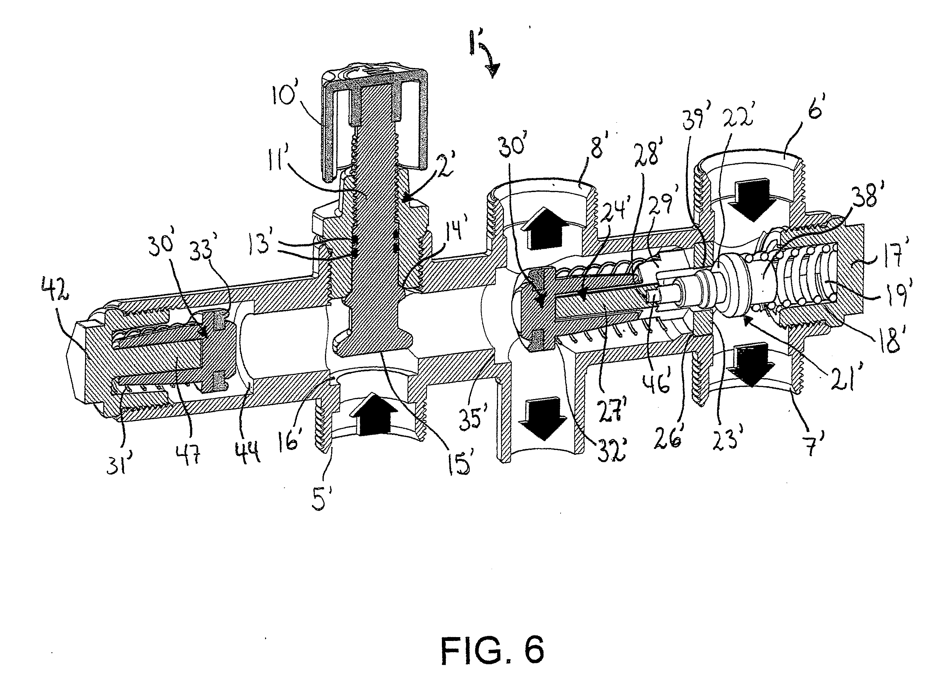

Referring to Figures 4-6, there is shown a second embodiment of the combination valve or fitting 1', which mainly differs from the first embodiment in that in addition to a hot water outlet 7' there is also provided a cold water outlet 41 with check valve. Thus, the parts that are the same as or similar to those in the first embodiment are designated by the same reference numerals, but with the suffix of an apostrophe ('), and reference is made primarily to the description above for the function and structure of these parts. As for the first embodiment, the overflow or relief valve 4' is known *per se,* and constitutes a separate thread-fastened part that has been omitted from Figures 5 and 6, and where the outlet of the overflow valve is indicated by the reference numeral 4'.

As can be seen from Figures 4-6, water intake takes place from the water mains through the inlet 5'. When the stopcock 2' is in an open position, the water is passed into a right-hand part of the figures having a similar structure and in an identical function as the first embodiment, and into a left-hand part of the figures where there is provided a check valve 42 and an outlet 41 for cold water. At the left-hand end of the valve 1 body there is provided an end plug 42 made having a centric shaft 47 similar to the shaft 27' on the seat/shaft element 24', and with an annular seat around the shaft 47 for receiving a spring 31'. An additional check valve piston 30' is thus arranged about the shaft 47. The check valve piston 30', in a closed position, rests sealingly against a seat 44, and only opens when cold water in drawn off via the outlet 41. It is thus impossible for cold water from taps in the dwelling to be passed back to the water mains and the water heater via the valve 1' inlet 5'.

One advantage of the integral cold water solution in the combination valve 1' compared with the combination valve 1 is that since all water from the dwelling's main intake is passed via the valve 1', a sudden temperature increase in the hot draw-off water from 7' on the simultaneous drawing of large amounts of cold water, for example when a washing machine starts drawing water, is avoided. This is because the pressure loss is almost the same on the cold water and the hot water side of the valve 1' (respectively on the left-hand side and the right-hand side of the figures).

Removal of an inspection plug 37' allows for inspection of the seal between the check piston 30' and its seat 44, between the check piston 30' and its seats 35' and between the stopcock piston 15' and its seat 16'. Removal of the inspection plug 37' is carried out after the stopcock 2' has been closed, and if the sealing is correct, water will not leak through the opening of the inspection plug 37' after the plug has been removed and a first volume of water under pressure, "trapped" between the aforementioned pistons, has possibly run out. If water continues to leak out through the inspection plug 37' opening, this indicates leakage between one or more of the aforementioned pistons and seats. The check valve pistons can then be changed one after the other until the leakage has been eliminated, and as was the case for the first embodiment, this can be done without dismantling the associated piping by unscrewing the end plugs 17' and 42'. A pressure gauge for leakage testing of the valve 1' and for testing the water pressure may also be connected to the inspection plug 37' opening.

Common to both embodiments is that all the plugs 12, 17, 37, 12', 17', 37', 42 are made having a round, annular surface 55, 55' in sealing abutment with a conical seat in the valve 1,1' body when the plug has been screwed in fully. The use of O-rings, thread sealing tape and the like will thus be unnecessary in order to obtain satisfactory sealing between respective plug 12, 17, 37, 12', 17', 37', 42 and the body. The plug 12, 17, 37, 12', 17', 37', 42 is preferably made of plastic and the valve 1; 1' body is preferably made of metal, preferably brass, so that the plastic will be deformed slightly when the plug 12, 17, 37, 12', 17', 37', 42 is screwed in fully.

A common feature of all valves in the field is that the stopcock is typically closed only a few times in the course of the valve's lifetime, and normally is in an open position. However, the check valve or valves of the valve will be opened and closed each time water is drawn, and thus typically many hundred thousand times during the valve's lifetime. The last-mentioned is therefore subjected to decidedly the most wear, and will be the part or parts that must usually be replaced. However, the wear is however reduced to a minimum, in that the surface 33, 33' consists of the surface of an annular gasket, preferably of rubber, which is essentially made in the form of a semi O-ring gasket, and which seals against a flat seat. Tests have shown that this solution seals at a pressure of as little as 200 mmVS between the gasket and the seat.

For securing the gasket to a rectangular groove 53 radially formed in the surface of the check valve piston 30, the annular gasket advantageously has a rectangular part with an inner radial portion that fits in said rectangular groove 53 and an outer radial portion with which the part having the form of an essentially semi O-ring gasket is integrally made. One side 57 of the groove which supports the side of the gasket opposite the surface 33, 33', or the rear side 57 of the gasket, advantageously extends along the whole rear side of the gasket for support thereof.

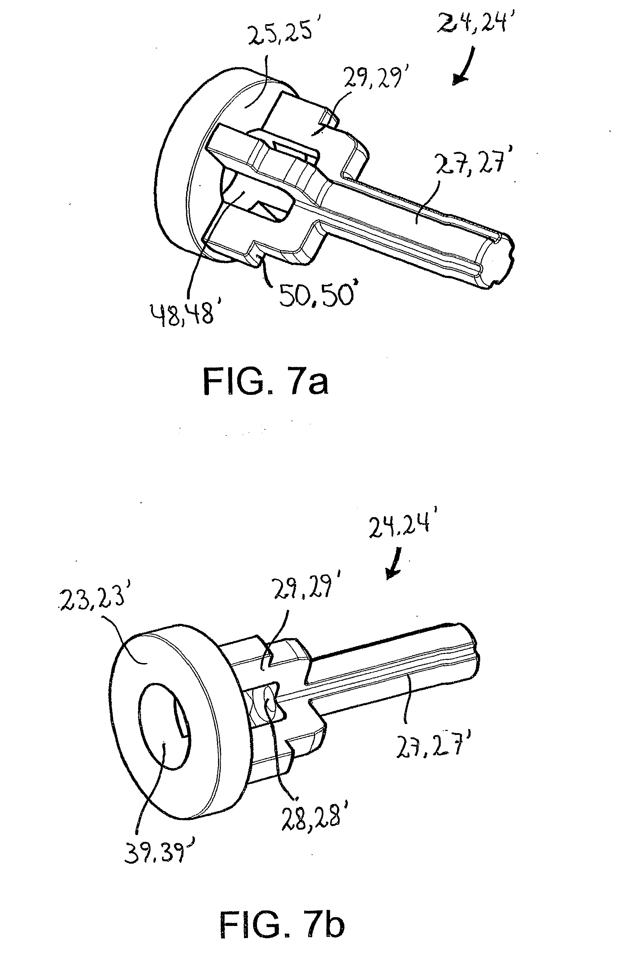

Referring to Figures 7a and 7b, these are two perspective views of the seat/shaft element 24, 24' which is a component of the combination valve 1, 1'described above. This element is preferably made of plastic to prevent furring, and the same applies also to the valve pistons 30, 30', 43, 15, 15' and the end plugs 17, 17' and 42.

## Claims

1. A stopcock (2; 2') for a water heater, which stopcock comprises an end plug (12; 12') with an opening through which there extends a spindle (11; 11') in threaded engagement with the opening, **characterised in that** a conical surface (14; 14') of the spindle (11; 11') is in sealing abutment with a correspondingly shaped seat in the end plug (12; 12') when the stopcock (2; 2') is in an open position.

2. A stopcock according to claim 1, **characterised in that** an outer piston (15; 15') is integrally made with the spindle (11; 11') for sealing abutment with a peripherally formed seat (16; 16') in the body when the stopcock (2; 2') is in a closed position.
